# EUROPEAN PATENT APPLICATION

(11) **EP 4 738 678 A1**
(43) Date of publication of application: **06.05.2026**
(21) Application number: 24831678.8
(22) Date of filing: 13.06.2024
(51) Int. Cl.: H02M 3/28, H02J 7/02, H02J 7/10

(54) **POWER SUPPLY SYSTEM AND CONTROL PROGRAM**

(30) Priority: 30.06.2023 JP 2023108739
(71) Applicant: DENSO CORPORATION, Kariya-city, Aichi 448-8661 (JP)
(72) Inventor: ITO, Mitsutaka, Nisshin-city, Aichi 470-0111 (JP); KURACHI, Taisuke, Nisshin-city, Aichi 470-0111 (JP); YAMADA, Tetsuya, Nisshin-city, Aichi 470-0111 (JP)
(74) Representative: TBK
(86) International application number: PCT/JP2024/021429
(87) International publication number: WO 2025/004813

(57) **Abstract**

A power supply system (10) includes a rechargeable battery (31, 61) and a conversion circuit (40, 70) that converts power input from the rechargeable battery to a primary-side terminal pair (41, 42, 71, 72) by drive of a switching element and outputs the converted power from a secondary-side terminal pair (47, 48, 77, 78). A positive electrode and a negative electrode of the rechargeable battery are individually connected to the primary-side terminal pair of the conversion circuit, and the rechargeable battery is connected in series to the secondary-side terminal pair of the conversion circuit. The power supply system includes a connection retaining circuit (49, 79) that retains the secondary-side terminal pair in a state of being connected.

## Description

### [Cross Reference to Related Application]

The present application is based on Japanese Application No. 2023-108739 filed on June 30, 2023, the contents of which are incorporated herein by reference.

### [Technical Field]

The present disclosure relates to a power supply system.

### [Background Art]

For example, there is a control system for rechargeable batteries which includes a plurality of rechargeable batteries and a converter that controls the charge and discharge currents of each of the rechargeable batteries (see PTL 1). In the control system for rechargeable batteries described in PTL 1, the efficiency of the entire system is enhanced by distributing the total current instruction value for the plurality of rechargeable batteries to the converters depending on the states of charge (SOC) of the rechargeable batteries, the output voltages of the rechargeable batteries, the total charge and discharge electric power amounts of the rechargeable batteries, the temperature properties of the rechargeable batteries, and the like.

### [Citation List]

### [Patent Literature]

PTL 1: JP 2014-207790 A

### [Summary of the Invention]

In the control system for rechargeable batteries described in PTL 1, converters (conversion circuits) connected to the respective rechargeable batteries must necessarily be driven in a switching manner in order to output power from the rechargeable batteries. Therefore, the switching losses of the converters occur even in a situation where the voltages of the rechargeable batteries do not need to be increased or decreased at the time of outputting power from the rechargeable batteries, and there is yet room for improvement in enhancing the efficiency of the system.

The present disclosure has been made to solve the above-described problem, and has as its main object to reduce loss when supplying power in a power supply system including a rechargeable battery and a conversion circuit.

A first measure for solving the above-described problem is
a power supply system including a rechargeable battery and a conversion circuit that converts power input from the rechargeable battery to a primary-side terminal pair by drive of a switching element and outputs the converted power from a secondary-side terminal pair,
in which a positive electrode and a negative electrode of the rechargeable battery are individually connected to the primary-side terminal pair of the conversion circuit, and the rechargeable battery is connected in series to the secondary-side terminal pair of the conversion circuit, and
in which the power supply system includes a connection retaining circuit that retains the secondary-side terminal pair in a state of being connected.

According to the above-described configuration, a power supply system includes a rechargeable battery and a conversion circuit that converts power input from the rechargeable battery to a primary-side terminal pair by drive of a switching element and outputs the power from a secondary-side terminal pair. Therefore, a power supply system can convert power input from the rechargeable battery to a primary-side terminal pair by driving a switching element in a conversion circuit and output the power from a secondary-side terminal pair. When power is converted by a conversion circuit, switching losses (turn-on and turn-off losses) occur in the switching element. Note that switching losses are losses that occur in connection with the switch driving (turn-on and turn-ff driving) of a switching element.

Here, a positive electrode and a negative electrode of the rechargeable battery are individually connected to the primary-side terminal pair of the conversion circuit, and the rechargeable battery is connected in series to the secondary-side terminal pair of the conversion circuit. According to such a configuration, a voltage that is the sum of an output voltage Vb of a rechargeable battery and an output voltage Vo of a conversion circuit is an output voltage Vm of a rechargeable battery module. Therefore, it is possible to reduce an output voltage Vo required of a conversion circuit when a rechargeable battery module is required to have an output voltage Vm, as compared with a rechargeable battery module in which a rechargeable battery is connected in parallel to a secondary-side terminal pair of a conversion circuit. Therefore, a rated voltage of a conversion circuit can be reduced, and a rated capacity of a conversion circuit can be accordingly reduced. This can reduce the size of a conversion circuit.

Further, a power supply system includes a connection retaining circuit that retains the secondary-side terminal pair in a state of being connected. Therefore, in a situation where it is unnecessary to increase a voltage to higher than a voltage of a rechargeable battery when outputting power from a rechargeable battery, power can be directly output from a rechargeable battery by retaining a secondary-side terminal pair connected in series to a rechargeable battery in a state of being connected by a connection retaining circuit (hereinafter, referred to as a "conduction mode"). Therefore, power can be output without performing continuous switching drive (turn-on drive and turn-off drive) of a switching element for power conversion, and switching losses of a switching element can be suppressed. As a result, the efficiency of a power supply system can be enhanced.

In a second measure, the connection retaining circuit is constituted by a secondary-side circuit of the conversion circuit connected to the secondary-side terminal pair and retains the secondary-side terminal pair in a state of being connected by the secondary-side circuit via a secondary-side switching element that is the switching element contained in the secondary-side circuit. According to such a configuration, it is unnecessary to add a new circuit as a connection retaining circuit to a power supply system, and a secondary-side circuit of a conversion circuit can be used as a connection retaining circuit. This allows a main loss in a conduction mode to be only a conduction loss of a secondary-side switching element of a conversion circuit or only a conduction loss of an antiparallel diode contained in a secondary-side switching element. Note that a conduction loss is a loss that occurs due to the conduction to a switching element, a diode, or the like.

In a third measure, the connection retaining circuit includes a bypass that bypasses the conversion circuit and connects the secondary-side terminal pair and a bypass switch that interrupts and connects the bypass, and retains the secondary-side terminal pair in a state of being connected by retaining the bypass in a state of being connected by the bypass switch. According to such a configuration, power can be directly output from a rechargeable battery by retaining a bypass in a state of being connected by a bypass switch. This allows a main loss in a conduction mode to be only a conduction loss of a bypass switch. Therefore, loss when outputting power from a rechargeable battery can be further suppressed by, for example, adopting as a bypass switch a switch having a conduction loss smaller than that of a secondary-side switching element of a conversion circuit.

In a fourth measure, a rechargeable battery module is constituted by the rechargeable battery, the conversion circuit, and the connection retaining circuit, the rechargeable battery module is connected to a power supply bus, and the power supply system further includes a control unit configured to execute a conduction mode of retaining the secondary-side terminal pair in a state of being connected by the connection retaining circuit of the rechargeable battery module, on condition that a difference between a bus voltage as a voltage of the power supply bus and an output voltage of the rechargeable battery of the rechargeable battery module is smaller than a voltage threshold value.

According to the above-described configuration, a rechargeable battery module is constituted by the rechargeable battery, the conversion circuit, and the connection retaining circuit, and the rechargeable battery module is connected to a power supply bus. Therefore, power can be supplied from a rechargeable battery module to a power supply bus. Note that a power supply bus is a power path (common power path) that is shared for connecting a plurality of circuits, devices, and apparatuses to exchange power in a power supply system.

A control unit executes a conduction mode of retaining the secondary-side terminal pair in a state of being connected by the connection retaining circuit of the rechargeable battery module, on condition that a difference between a bus voltage as a voltage of the power supply bus and an output voltage of the rechargeable battery of the rechargeable battery module is smaller than a voltage threshold value. Therefore, when a difference between a bus voltage and an output voltage of a rechargeable battery is smaller than a voltage threshold value, i.e., when it is unnecessary to increase a voltage to higher than a voltage of a rechargeable battery when outputting power from a rechargeable battery module, power can be directly output from a rechargeable battery by executing a conduction mode. On the other hand, when a difference between a bus voltage and an output voltage of a rechargeable battery is not smaller than a voltage threshold value, i.e., when it is necessary to increase an output voltage of a rechargeable battery module (increase a voltage to higher than a voltage of a rechargeable battery) when outputting power from a rechargeable battery module, it is possible not to execute a conduction mode.

Note that in a state in which power is output from a rechargeable battery module to a power supply bus, an output voltage of a rechargeable battery module is equal to an output voltage of a rechargeable battery even when an output voltage of a rechargeable battery module is not increased by a conversion circuit. Therefore, in a state in which power is output from a rechargeable battery module to a power supply bus, a bus voltage is always greater than or equal to an output voltage of a rechargeable battery of a rechargeable battery module.

In a fifth measure, further including a plurality of the rechargeable battery modules, in which the plurality of the rechargeable battery modules are connected in parallel to the power supply bus, and the control unit selects the rechargeable battery module including the rechargeable battery having the highest output voltage as the rechargeable battery module to be put in the conduction mode in a plurality of the rechargeable battery modules.

According to the above-described configuration, a power supply system includes a plurality of the rechargeable battery modules, and the plurality of the rechargeable battery modules are connected in parallel to the power supply bus. Therefore, power can be supplied from the plurality of the rechargeable battery modules to the power supply bus. Then, the control unit selects a rechargeable battery module including the rechargeable battery having the highest output voltage as the rechargeable battery module to be put in the conduction mode in a plurality of the rechargeable battery modules. Therefore, a bus voltage can be retained as high as possible when executing a conduction mode to directly output power from a rechargeable battery.

In a sixth measure, further including a plurality of the rechargeable battery modules, the plurality of the rechargeable battery modules are connected in parallel to the power supply bus, and the control unit sequentially selects the rechargeable battery modules in descending order of the output voltages of the rechargeable batteries as the rechargeable battery module to be put in the conduction mode in a plurality of the rechargeable battery modules.

According to the above-described configuration, the control unit sequentially selects the rechargeable battery modules in descending order of the output voltages of the rechargeable batteries as the rechargeable battery module to be put in the conduction mode in a plurality of the rechargeable battery modules. Therefore, power can be supplied from more rechargeable batteries to a power supply bus while suppressing a decrease of a bus voltage when executing a conduction mode to directly output power from a rechargeable battery.

In a seventh measure, the control unit adjusts an output voltage of the conversion circuit such that in a rechargeable battery module in which a difference between the bus voltage and an output voltage of the rechargeable battery of the rechargeable battery module is not smaller than the voltage threshold value, a difference between the bus voltage and an output voltage of the rechargeable battery module is smaller than the voltage threshold value. According to such a configuration, an output voltage of a rechargeable battery module can be raised by adjusting an output voltage of the conversion circuit of the rechargeable battery module, in a rechargeable battery module in which a difference between the bus voltage and an output voltage of the rechargeable battery of the rechargeable battery module is not smaller than the voltage threshold value. Thus, power can also be supplied to a power supply bus from a rechargeable battery module including a rechargeable battery having a low output voltage.

In an eighth measure, further including a plurality of the rechargeable battery modules, the plurality of the rechargeable battery modules are connected in parallel to the power supply bus, and the control unit selects the rechargeable battery module to be put in the conduction mode and adjusts the state of the rechargeable battery of the selected rechargeable battery module so as to retain a state in which a difference between the bus voltage and an output voltage of the rechargeable battery of the selected rechargeable battery module is smaller than the voltage threshold value.

According to the above-described configuration, the control unit selects the rechargeable battery module to be put in the conduction mode. Therefore, power can be directly output from the rechargeable battery of the selected rechargeable battery module, on condition that a difference between a bus voltage and an output voltage of the rechargeable battery of the selected rechargeable battery module is smaller than a voltage threshold value. Furthermore, the control unit adjusts the state of the rechargeable battery of the selected rechargeable battery module so as to retain a state in which a difference between the bus voltage and an output voltage of the rechargeable battery of the selected rechargeable battery module is smaller than the voltage threshold value. Thus, a conduction mode can be continued while retaining an output voltage of a rechargeable battery of the selected rechargeable battery module.

In a ninth measure, further including a plurality of the rechargeable battery modules, and the plurality of the rechargeable battery modules are connected in parallel to the power supply bus, and the control unit puts the rechargeable battery module not put in the conduction mode into the conduction mode, on condition that a difference between an output voltage of the rechargeable battery of the rechargeable battery module put in the conduction mode and an output voltage of the rechargeable battery of the rechargeable battery module not put in the conduction mode is smaller than the voltage threshold value, while any one of the rechargeable battery modules is put into the conduction mode.

While any one of the rechargeable battery modules is put into the conduction mode, an output voltage of a rechargeable battery of a rechargeable battery module put in a conduction mode and a bus voltage are equal to each other. According to the above-described configuration, a rechargeable battery module not put in a conduction mode can be put in a conduction mode to directly output power from a rechargeable battery, when it is unnecessary to increase a voltage to higher than a voltage of a rechargeable battery when outputting power from a rechargeable battery of a rechargeable battery module not put in a conduction mode.

In a tenth measure, the control unit charges the rechargeable battery of the rechargeable battery module not put in the conduction mode from the rechargeable battery of the rechargeable battery module put in the conduction mode, when a difference between an output voltage of the rechargeable battery of the rechargeable battery module put in the conduction mode and an output voltage of the rechargeable battery of the rechargeable battery module not put in the conduction mode is not smaller than the voltage threshold value. According to such a configuration, an output voltage can be lowered by decreasing a charged amount of the rechargeable battery of the rechargeable battery module put in the conduction mode, and an output voltage can be raised by increasing a charged amount of the rechargeable battery of the rechargeable battery module not put in the conduction mode. Therefore, it is possible to reduce a difference between an output voltage of the rechargeable battery of the rechargeable battery module put in the conduction mode and an output voltage of the rechargeable battery of the rechargeable battery module not put in the conduction mode, and it is easy to put the rechargeable battery module not put in the conduction mode into a conduction mode.

In an eleventh measure, the control unit charges the rechargeable battery of the rechargeable battery module not put in the conduction mode from the rechargeable battery of the rechargeable battery module put in the conduction mode, by lowering an output voltage of the conversion circuit of the rechargeable battery module not put in the conduction mode to lower than a current output voltage.

According to the above-described configuration, an output voltage of the rechargeable battery module not put in the conduction mode can be lowered to lower than an output voltage of a rechargeable battery of the rechargeable battery module put in the conduction mode, by lowering an output voltage of the conversion circuit of the rechargeable battery module not put in the conduction mode to lower than a current output voltage. Thus, the rechargeable battery of the rechargeable battery module not put in the conduction mode can be charged from the rechargeable battery of the rechargeable battery module put in the conduction mode.

A twelfth measure is
a control program applied to a power supply system in which a rechargeable battery module including a rechargeable battery and a conversion circuit that converts power input from the rechargeable battery to a primary-side terminal pair by drive of a switching element and outputs the power from a secondary-side terminal pair is connected to a power supply bus, a positive electrode and a negative electrode of the rechargeable battery are individually connected to the primary-side terminal pair of the conversion circuit, the rechargeable battery is connected in series to the secondary-side terminal pair of the conversion circuit, and the power supply system includes a connection retaining circuit that retains the secondary-side terminal pair in a state of being connected,
in which the control program causes a computer to execute a conduction mode of retaining the secondary-side terminal pair in a state of being connected by the connection retaining circuit of the rechargeable battery module, on condition that a difference between a bus voltage as a voltage of the power supply bus and an output voltage of the rechargeable battery of the rechargeable battery module is smaller than a voltage threshold value.

According to the above-described configuration, the same working effect as in the fourth measure can be exerted by causing a computer to execute a control program applied to a power supply system.

### [Brief Description of the Drawings]

The above-described and other objects, features, and advantages of the present disclosure will become clearer from the following detailed description with reference to the accompanying drawings. The drawings are as follows:
Fig. 1 is a circuit diagram of a power supply system of a first embodiment;
Fig. 2 is a circuit diagram showing an example of a conversion circuit;
Fig. 3 is a flowchart showing a procedure for executing a conduction mode of a first embodiment;
Fig. 4 is a circuit diagram showing a state in which a first rechargeable battery module of a first embodiment is put in a conduction mode;
Fig. 5 is a circuit diagram showing a state in which a first rechargeable battery module and a second rechargeable battery module of a first embodiment are put in a conduction mode;
Fig. 6 is a circuit diagram showing a state in which a first rechargeable battery module, a second rechargeable battery module, and a third rechargeable battery module of a first embodiment are put int a conduction mode;
Fig. 7 is a diagram showing losses occurring in rechargeable battery modules of a comparative example and a first embodiment;
Fig. 8 is a circuit diagram of a power supply system of a second embodiment;
Fig. 9 is a flowchart showing a procedure for executing a conduction mode of a second embodiment;
Fig. 10 is a circuit diagram showing a state in which a first rechargeable battery module of a second embodiment is put in a conduction mode;
Fig. 11 is a circuit diagram showing a state in which a first rechargeable battery module and a second rechargeable battery module of a second embodiment are put in a conduction mode;
Fig. 12 is a circuit diagram showing a state in which a first rechargeable battery module, a second rechargeable battery module, and a third rechargeable battery module of a second embodiment are put int a conduction mode;
Fig. 13 is a diagram showing losses occurring of a comparative example and a second embodiment;
Fig. 14 is a circuit diagram of another modification example of a power supply system;
Fig. 15 is a circuit diagram of another modification example of a power supply system;
Fig. 16 is a circuit diagram of a modification example of a conversion circuit;
Fig. 17 is a circuit diagram of another modification example of a conversion circuit;
Fig. 18 is a circuit diagram of a modification example of a rechargeable battery module; and
Fig. 19 is a circuit diagram of another modification example of a rechargeable battery module.

### [Description of the Embodiments]

### (First embodiment)

Hereinafter, a first embodiment embodied in a power supply system that supplies power to a load will be described with reference to the drawings.

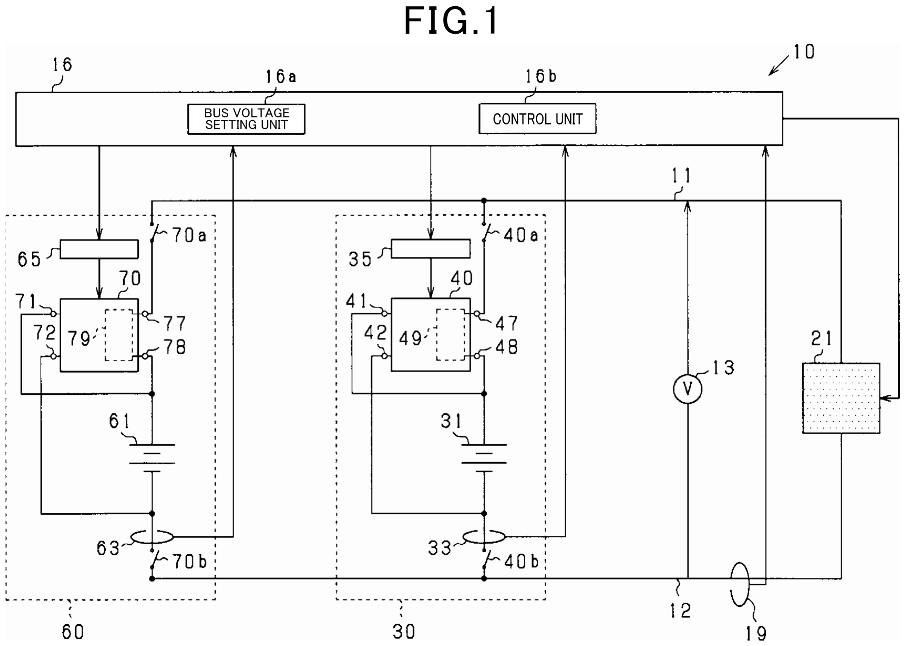

As shown in Fig. 1, a power supply system 10 includes buses 11 and 12 (power supply bus), a first rechargeable battery module 30, a second rechargeable battery module 60, a voltage sensor 13, a current sensor 19, an electronic control unit (ECU) 16, and the like. Note that the positive electrode side (positive side) of the bus is referred to as a bus 11, and the negative electrode side (negative side) of the bus is referred to as a bus 12. The bus 12 is earthed.

The first rechargeable battery module 30 (rechargeable battery module), the second rechargeable battery module 60 (rechargeable battery module), a load 21, and the voltage sensor 13 are connected in parallel to the buses 11 and 12. The rechargeable battery modules 30 and 60 input and output power to and from the buses 11 and 12. Power is input to the load 21 from the buses 11 and 12 or is output from the load 21 to the buses 11 and 12. The voltage sensor 13 detects a bus voltage Vbus that is a voltage between the bus 12 and the bus 11. The current sensor 19 detects a current flowing through the bus 12 (the load 21).

Examples of the load 21 include a combination of an inverter and a motor generator (MG) (a motor unit with an inverter), an electric heater, and a DCDC converter. A motor generator (MG), for example, drives an electric vehicle by power supplied from an inverter and also performs regenerative power generation using torque applied from the electric vehicle. An inverter converts power between the buses 11 and 12 and the MG. An electric heater, for example, generates heat by high voltage supplied from the buses 11 and 12 to warm a vehicle interior and a battery. A DCDC converter, for example, converts DC power supplied from the buses 11 and 12 to supply DC power or converts DC power supplied from a solar panel or the like to supply DC power to the buses 11 and 12. The number of loads 21 may be one or more.

The first rechargeable battery module 30 includes a first rechargeable battery 31, a first current sensor 33, a first drive circuit 35, a first conversion circuit 40, relays 40a and 40b, and the like. An example of the first rechargeable battery 31 (rechargeable battery) is a high-voltage secondary battery such as a lithium-ion battery or a nickel-metal hydride battery, and the type thereof is optional. The first current sensor 33 (current sensor) detects a current flowing through the first rechargeable battery 31. The detected value by the first current sensor 33 is input to the ECU 16 and used for, for example, calculation of the charged amount (state of charge (SOC)) of the first rechargeable battery 31. The first drive circuit 35 (drive circuit) drives on/off a switching element (described later) included in the first conversion circuit 40. The first drive circuit 35 is controlled by the ECU 16. The relays 40a and 40b respectively disconnect and connect the rechargeable battery module 30 to the buses 11 and 12. Note that the first rechargeable battery 31 (rechargeable battery) may be a secondary battery without high voltage.

The first conversion circuit 40 (conversion circuit) includes a primary-side positive electrode terminal 41 and a primary-side negative electrode terminal 42 which are a primary-side terminal pair as well as a secondary-side positive electrode terminal 47 and a secondary-side negative electrode terminal 48 which are a secondary-side terminal pair. The negative electrode of the first rechargeable battery 31 is connected to the bus 12. The primary-side positive electrode terminal 41 is connected to the positive electrode of the first rechargeable battery 31, and the primary-side negative electrode terminal 42 is connected to the negative electrode of the first rechargeable battery 31. Further, the secondary-side negative electrode terminal 48 is connected to the positive electrode of the first rechargeable battery 31. The secondary-side positive electrode terminal 47 is connected to the bus 11. That is, the positive electrode and the negative electrode of the first rechargeable battery 31 are respectively connected to the primary-side terminal pair 41 and 42 of the first conversion circuit 40, and the first rechargeable battery 31 is connected in series to the secondary-side terminal pair 47 and 48 of the first conversion circuit 40. The first conversion circuit 40 converts power input from the first rechargeable battery 31 to the primary-side terminal pair 41 and 42 and outputs the power from the secondary-side terminal pair 47 and 48. A secondary-side circuit 49 included in the first conversion circuit 40 will be described later. Note that the first conversion circuit 40 is a two-way conversion circuit that can also convert power input to the secondary-side terminal pair 47 and 48 and output the power from the primary-side terminal pair 41 and 42.

The second rechargeable battery module 60 has the same configuration as that of the first rechargeable battery module 30 and includes a second rechargeable battery 61 (rechargeable battery), a second current sensor 63 (current sensor), a second drive circuit 65 (drive circuit), a second conversion circuit 70, relays 70a and 70b, and the like. The second conversion circuit 70 (conversion circuit) has the same configuration as that of the first conversion circuit 40 and includes a primary-side positive electrode terminal 71 and a primary-side negative electrode terminal 72 which are a primary-side terminal pair as well as a secondary-side positive electrode terminal 77 and a secondary-side negative electrode terminal 78 which are a secondary-side terminal pair. Since the connection aspect of these constituents is also the same as in the first rechargeable battery module 30, the above-described description regarding the first rechargeable battery module 30 is incorporated herein by reference. A secondary-side circuit 79 included in the second conversion circuit 70 will be described later. Note that the configuration of the first rechargeable battery module 30 has the same function as the configuration of the second rechargeable battery module 60, but the rating and withstand voltage may differ between the configurations.

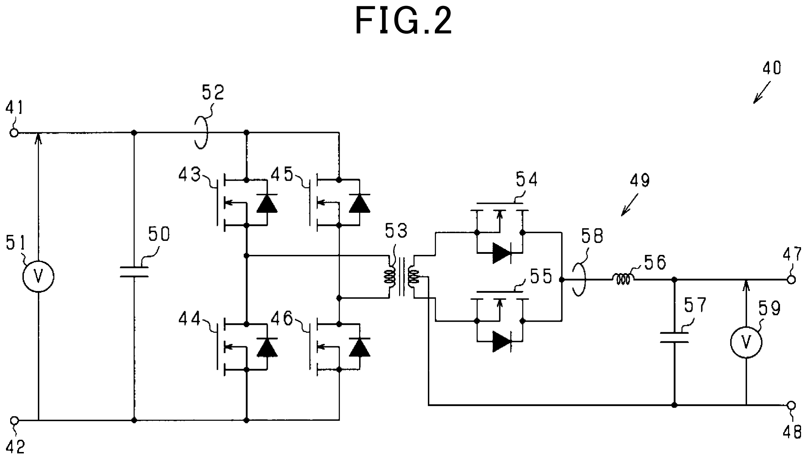

Fig. 2 is a diagram showing an example of the first conversion circuit 40. The first conversion circuit 40 is a known center tap type insulated DCDC converter. The first conversion circuit 40 includes a primary-side circuit and a secondary-side circuit 49. The first conversion circuit 40 includes switching elements 43 to 46, 54, and 55, smoothing capacitors 50 and 57, a transformer 53, a reactor 56, voltage sensors 51 and 59, current sensors 52 and 58, and the like. The switching elements 43 to 46, 54, and 55 are each, for example, an FET or an insulated gate bipolar transistor (IGBT). The switching elements 43 to 46 constitute a full bridge circuit. The connection point between the switching element 43 and the switching element 44 and the connection point between the switching element 45 and the switching element 46 are individually connected to both ends of the primary-side coil of the transformer 53. The switching elements 54 and 55 are individually connected between both ends of the secondary-side coil of the transformer 53 and the reactor 56. The voltage sensor 51 detects a voltage between the primary-side negative electrode terminal 42 and the primary-side positive electrode terminal 41, i.e., an output voltage Vb of the first rechargeable battery 31 (an input voltage Vi of the first conversion circuit 40). The current sensor 52 detects an input current Ii which is a current input to the primary-side circuit. The voltage sensor 59 detects a voltage between the secondary-side negative electrode terminal 48 and the secondary-side positive electrode terminal 47, i.e., an output voltage Vo of the first conversion circuit 40. The current sensor 58 detects a current flowing through the reactor 56, i.e., an output current Io of the first conversion circuit 40. The detected values from the voltage sensors 51 and 59 and the current sensors 52 and 58 are input to the ECU 16. Note that the secondary-side circuit 49 (connection retaining circuit) includes the secondary-side coil of the transformer 53, the switching elements 54 and 55, the reactor 56, and paths connecting between these constituents and the secondary-side terminal pair 47 and 48.

The ECU 16 (control device) is configured as, for example, a microcomputer (computer) including a CPU, a ROM, a RAM, an input-output interface, and the like. The ECU 16 controls the states of the relays 40a, 40b, 70a, and 70b and the state of the load 21. The ECU 16 executes a control program applied to the power supply system 10 thereby to achieve functions of a bus voltage setting unit 16a, a control unit 16b, and the like.

The bus voltage setting unit 16a sets a bus voltage requirement value Vbus* that is a voltage required to be supplied from the buses 11 and 12 to the load 21. The bus voltage setting unit 16a sets the bus voltage requirement value Vbus* based on the state of the load 21.

The control unit 16b controls the output voltages Vo1 and Vo2 of the conversion circuits 40 and 70, respectively, such that the output voltages Vm1 and Vm2 of the rechargeable battery modules 30 and 60 each become the bus voltage requirement value Vbus* (each approach the bus voltage requirement value Vbus*). For example, the control unit 16b controls the switching elements 43 to 46, 54, and 55 based on the constituents values from the voltage sensors 51 and 59 and the current sensors 52 and 58 thereby to control the first output voltage Vo1 of the first conversion circuit 40 to the first output voltage requirement value Vo1*. Specifically, the first output voltage requirement value Vo1* is set to a voltage (Vo1* = Vbus* - Vb1) obtained by subtracting the first output voltage Vb1 of the first rechargeable battery 31 from the bus voltage requirement value Vbus*. In the same manner, the control unit 16b controls the second output voltage Vo2 of the second conversion circuit 70 to a second output voltage requirement value Vo2*. Specifically, the second output voltage requirement value Vo2* is set to a voltage (Vo2* = Vbus* - Vb2) obtained by subtracting the second output voltage Vb2 of the second rechargeable battery 61 from the bus voltage requirement value Vbus*.

Note that in a state in which power is output from the rechargeable battery module 30 (60) to the buses 11 and 12, the output voltage Vm1 (Vm2) of the rechargeable battery module 30 (60) is equal to the output voltage Vb1 (Vb2) of the rechargeable battery 31 (61), even when the voltage is not increased by the conversion circuit 40 (70) to higher than the output voltage Vb1 (Vb2) of the rechargeable battery 31 (61). Therefore, in a state in which power is output from the rechargeable battery module 30 (60) to the buses 11 and 12, the bus voltage Vbus is always not less than the output voltage Vb1 (Vb2) of the rechargeable battery 31 (61) of the rechargeable battery module 30 (60).

Here, depending on the bus voltage requirement value Vbus* and the charged amounts of the rechargeable batteries 31 and 61, there can occur a situation where the bus voltage Vbus and the output voltages Vb1 and Vb2 of the rechargeable batteries 31 and 61 approach each other so that it is unnecessary to increase the output voltages Vm1 and Vm2 of the rechargeable battery modules 30 and 60 by the conversion circuits 40 and 70 when outputting power from the rechargeable battery modules 30 and 60. In this case, when the switching elements 43 to 46, 54, and 55 of the conversion circuits 40 and 70 are continuously switching-driven to output power from the rechargeable battery modules 30 and 60, a turn-on loss and a turn-off loss (a switching loss) as well as a conduction loss occur in the switching elements 43 to 46, 54, and 55.

Therefore, in the present embodiment, the control unit 16b (ECU 16) executes a conduction mode of retaining the secondary-side terminal pair 47 and 48 (77 and 78) in a state of being connected by the secondary-side circuit 49 (79) of the rechargeable battery module 30 (60), on condition that a difference between the bus voltage Vbus and the output voltage Vb1 (Vb2) of the rechargeable battery 31 (61) of the rechargeable battery module 30 (60) is smaller than a voltage threshold value Vx. Specifically, the secondary-side positive electrode terminal 47 (77) and the secondary-side negative electrode terminal 48 (78), which are the secondary-side terminal pair, are maintained in a state of being connected, by retaining the switching elements 54 and 55 (secondary-side switching elements) contained in the secondary-side circuit 49 (79) in an on-state. At this time, the switching elements 43 to 46 at the primary side of the conversion circuit (40, 70) of the rechargeable battery module 30 (60) are all retained in an off-state.

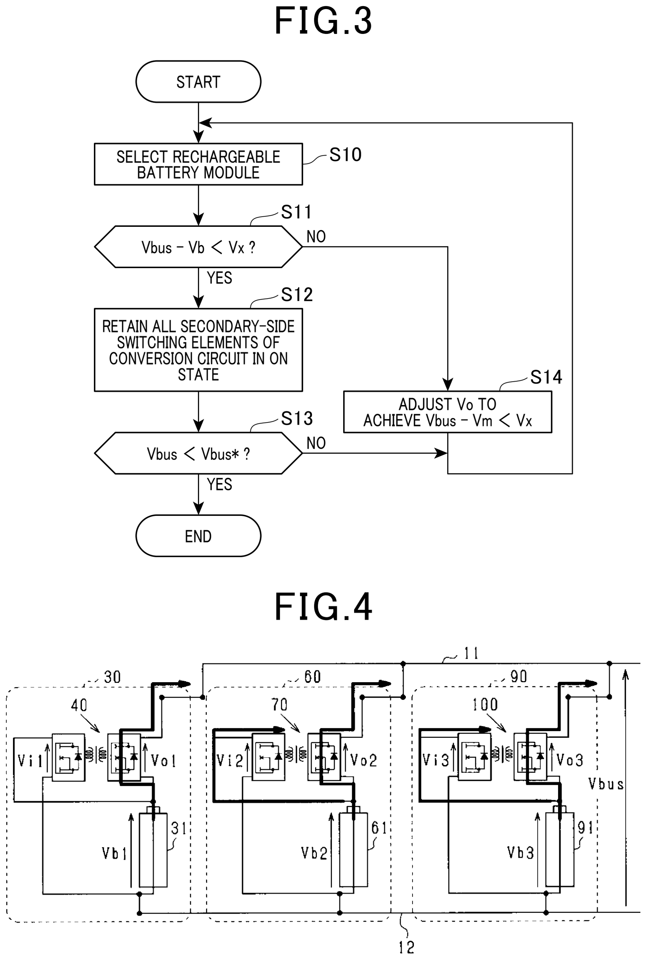

Fig. 3 is a flowchart showing a procedure for executing the conduction mode. The series of processes is executed by the control unit 16b of the ECU 16 in a state in which the conversion circuits 40 and 70 of the rechargeable battery modules 30 and 60 are driven to output power to the buses 11 and 12. Note that three or more rechargeable battery modules may be connected in parallel to the buses 11 and 12.

First, a rechargeable battery module including a rechargeable battery having the highest output voltage Vb is selected among rechargeable battery modules which have not been selected yet by the process of S10 (S10). At the start of the series of processes, all rechargeable battery modules are in a state of not having been selected yet. Note that when there is no rechargeable battery module not having been selected yet (when all rechargeable battery modules have been already selected), the series of processes ends (END).

Subsequently, it is determined whether a difference (Vbus - Vb) between a bus voltage Vbus and the output voltage Vb of the rechargeable battery of the selected rechargeable battery module is smaller than the voltage threshold value Vx (S11). The bus voltage Vbus is detected by the voltage sensor 13. The voltage threshold value Vx is, for example, a value that can be regarded as the bus voltage Vbus being equal (substantially equal) to the output voltage Vb of the rechargeable battery and a value that can suppress flowing of an inrush current and a circulating current in a plurality of rechargeable battery modules. When it is determined in this determination that a difference (Vbus - Vb) between the bus voltage Vbus and the output voltage Vb of the rechargeable battery of the selected rechargeable battery module is smaller than the voltage threshold value Vx (S11: YES), all of the secondary-side switching elements 54 and 55 of the conversion circuit of the selected rechargeable battery module are retained in an on-state (S12). At this time, all of the switching elements 43 to 46 at the primary side of the conversion circuit of the selected rechargeable battery module are retained in an off-state.

Subsequently, it is determined whether the bus voltage Vbus is lower than the bus voltage requirement value Vbus* (S13). When it is determined in this determination that the bus voltage Vbus is lower than the bus voltage requirement value Vbus* (S13: YES), the series of processes ends (END). On the other hand, it is determined that the bus voltage Vbus is not lower than the bus voltage requirement value Vbus* (S13: NO), the processes are executed again starting from the process of S10. That is, rechargeable battery modules are sequentially selected in descending order of the output voltages of the rechargeable batteries as a rechargeable battery module to be put in the conduction mode in a plurality of rechargeable battery modules.

Further, when it is determined in the process of S11 that a difference (Vbus - Vb) between the bus voltage Vbus and the output voltage Vb of the rechargeable battery of the selected rechargeable battery module is not smaller than the voltage threshold value Vx (S11: NO), the output voltage Vo of the conversion circuit of the selected rechargeable battery module is adjusted such that a difference (Vbus- Vm) between the bus voltage Vbus and the output voltage Vm of the selected rechargeable battery module is smaller than the voltage threshold value Vx (S14). Thereafter, the processes are executed again starting from the process of S10.

Figs. 4 to 6 are diagrams showing aspects of executing the conduction mode when a power supply system 10 includes a first rechargeable battery module 30, a second rechargeable battery module 60, and a third rechargeable battery module 90. All of output voltages Vm1 (Vb1 + Vo1), Vm2 (Vb2 + Vo2), and Vm3 (Vb3 + Vo3) of the rechargeable battery modules 30, 60, and 90 are equal to a bus voltage Vbus.

In Fig. 4, a difference between a bus voltage Vbus and a first output voltage Vb1 of a first rechargeable battery 31 is smaller than a voltage threshold value Vx, a difference between a bus voltage Vbus and a second output voltage Vb2 of a second rechargeable battery 61 is not less than a voltage threshold value Vx, and a difference between a bus voltage Vbus and a third output voltage Vb3 of a third rechargeable battery 91 is not less than a voltage threshold value Vx. In this case, the first rechargeable battery module 30 is put in the conduction mode, and a voltage elevating action is executed by conversion circuits 70 and 100 in the rechargeable battery modules 60 and 90, respectively. Therefore, a switching loss is cut in a first conversion circuit 40 of the first rechargeable battery module 30.

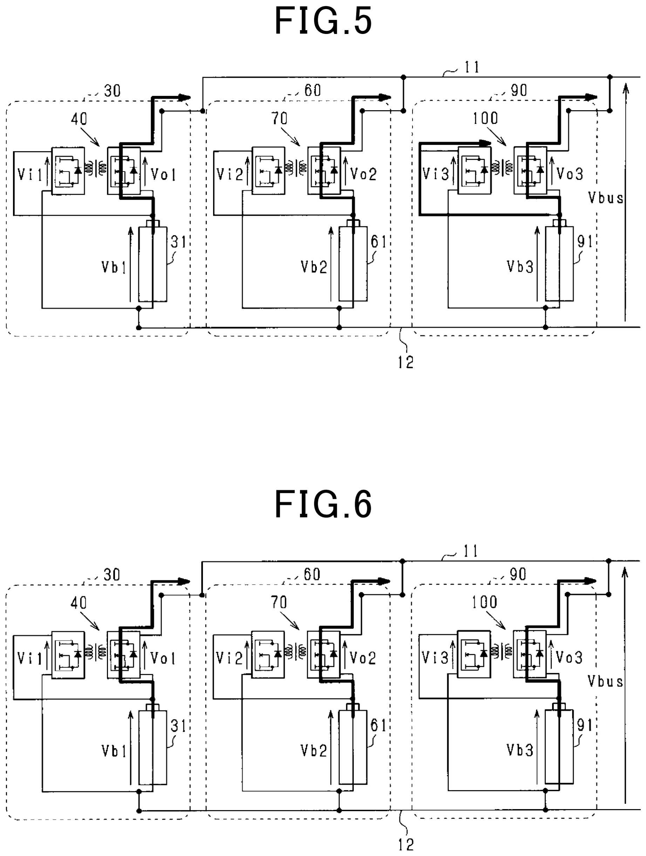

In Fig. 5, a difference between a bus voltage Vbus and a first output voltage Vb1 of the first rechargeable battery 31 is smaller than a voltage threshold value Vx, a difference between a bus voltage Vbus and a second output voltage Vb2 of the second rechargeable battery 61 is smaller than a voltage threshold value Vx, and a difference between a bus voltage Vbus and a third output voltage Vb3 of the third rechargeable battery 91 is not less than a voltage threshold value Vx. In this case, the rechargeable battery modules 30 and 60 are put in the conduction mode, and a voltage elevating action is executed by the third conversion circuit 100 in the third rechargeable battery module 90. Therefore, a switching loss is cut in the conversion circuits 40 and 70 of the rechargeable battery modules 30 and 60, respectively.

In Fig. 6, a difference between a bus voltage Vbus and a first output voltage Vb1 of the first rechargeable battery 31 is smaller than a voltage threshold value Vx, a difference between a bus voltage Vbus and a second output voltage Vb2 of the second rechargeable battery 61 is smaller than a voltage threshold value Vx, and a difference between a bus voltage Vbus and a third output voltage Vb3 of the third rechargeable battery 91 is smaller than a voltage threshold value Vx. In this case, the rechargeable battery modules 30, 60, and 90 are put in the conduction mode. Therefore, a switching loss is cut in the conversion circuits 40, 70, and 100 of the rechargeable battery modules 30, 60, and 90, respectively.

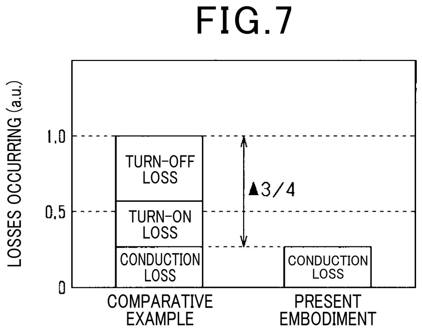

Fig. 7 is a diagram showing losses occurring in the rechargeable battery modules of a comparative example and the present embodiment. The comparative example expresses, for example, a loss when a first output voltage Vm1 is output in the first rechargeable battery module 30 by driving on/off the switching elements 43 to 46, 54, and 55 of the first conversion circuit 40. A turn-on loss and a turn-off loss occur in the switching elements 43 to 46, 54, and 55, and a conduction loss occurs in the switching elements 43 to 46, 54, and 55. The present embodiment expresses, for example, a loss when the first rechargeable battery module 30 is put in the conduction mode and outputs a first output voltage Vm1. In the present embodiment, a turn-on loss and a turn-off loss can be cut in the switching elements 43 to 46, 54, and 55, and only a conduction loss occurs in the switching elements 54 and 55. As a result, the loss in the comparative example can be cut by 3/4, and the loss occurring is 1/4 of the loss of the comparative example.

The present embodiment described in detail above has the following advantages.
· The positive electrodes and negative electrodes of the rechargeable batteries 31 and 61 are connected to the primary-side terminal pairs 41, 42, 71, and 72 of the conversion circuits 40 and 70, respectively, and the rechargeable batteries 31 and 61 are connected in series to the secondary-side terminal pairs 47, 48, 77, and 78 of the conversion circuits 40 and 70, respectively. According to such a configuration, the voltages obtained by adding the output voltages Vb1 and Vb2 of the rechargeable batteries 31 and 61 and the output voltages Vo1 and Vo2 of the conversion circuits 40 and 70 are the output voltages Vm1 and Vm2 of the rechargeable battery modules 30 and 60, respectively. Therefore, as compared to a rechargeable battery module in which the rechargeable batteries 31 and 61 are connected in parallel to the secondary-side terminal pairs 47, 48, 77, and 78 of the conversion circuits 40 and 70, respectively, it is possible to respectively lower the output voltages Vo1 and Vo2 required of the conversion circuits 40 and 70 when the output voltages Vm1 and Vm2 are respectively required of the rechargeable battery modules 30 and 60. Thus, the rated voltages of the conversion circuits 40 and 70 can be lowered, and the rated capacities of the conversion circuits 40 and 70 accordingly can be reduced. Therefore, the conversion circuits 40 and 70 can be reduced in size.
· The power supply system 10 includes connection retaining circuits (the secondary-side circuits 49 and 79) that retain the secondary-side terminal pairs 47, 48, 77, and 78 in a state of being connected. Therefore, in a situation where it is unnecessary to increase the voltage to higher than the voltages of the rechargeable batteries 31 and 61 when outputting power from the rechargeable batteries 31 and 61, power can be directly output from the rechargeable batteries 31 and 61 by executing a conduction mode of retaining the secondary-side terminal pairs 47, 48, 77, and 78 connected in series to the rechargeable batteries 31 and 61 in a state of being connected by the connection retaining circuits, respectively. Therefore, power can be output without performing continuous switching drive (turn-on drive and turn-off drive) of the switching elements 43 to 46, 54, and 55 for power conversion, and switching losses can be suppressed in the switching elements 43 to 46, 54, and 55. As a result, the efficiency of the power supply system 10 can be enhanced.
· The connection retaining circuit is constituted by the secondary-side circuit 49 of the first conversion circuit 40 connected to each of the secondary-side terminal pair 47 and 48, and retains the secondary-side terminal pair 47 and 48 in a state of being connected by the secondary-side circuit 49 via the secondary-side switching elements 54 and 55 contained in the secondary-side circuit 49. Further, the connection retaining circuit is constituted by the secondary-side circuit 79 of the second conversion circuit 70 connected to the secondary-side terminal pair 77 and 78, and retains the secondary-side switching elements 54 and 55 contained in the secondary-side circuit 79 in an on-state thereby to retain the secondary-side terminal pair 77 and 78 in a state of being connected. According to such a configuration, it is unnecessary to add a new circuit as the connection retaining circuit to the power supply system 10, and the secondary-side circuits 49 and 79 of the conversion circuits 40 and 70 can be used as the connection retaining circuit. This allows the main loss in the conduction mode to be only the conduction losses of the secondary-side switching elements 54 and 55 of the conversion circuits 40 and 70 or only the conduction losses of the antiparallel diodes contained in the secondary-side switching elements 54 and 55.
· The control unit 16b executes a conduction mode of retaining the secondary-side terminal pairs 47, 48, 77, and 78 in a state of being connected by the secondary-side circuits 49 and 79 of the rechargeable battery modules 30, 60, and 90, on condition that differences between the bus voltages Vbus as the voltage of the buses 11 and 12 and the output voltages Vb1, Vb2, and Vb3 of the rechargeable batteries 31, 61, and 91 of the rechargeable battery modules 30, 60, and 90 are smaller than the voltage threshold value Vx. Therefore, when the differences between the bus voltages Vbus and the output voltages Vb1, Vb2, and Vb3 of the rechargeable batteries 31, 61, and 91 are smaller than the voltage threshold value Vx, i.e., when it is unnecessary to increase the voltage to higher than the voltages of the rechargeable batteries 31, 61, and 91 when outputting power from the rechargeable battery modules 30, 60, and 90, power can be directly output from the rechargeable batteries 31, 61, and 91 by executing the conduction mode. On the other hand, when the differences between the bus voltages Vbus and the output voltages Vb1, Vb2, and Vb3 of the rechargeable batteries 31, 61, and 91 are not smaller than the voltage threshold value Vx, i.e., when it is necessary to increase the voltage to higher than the voltages of the rechargeable batteries 31, 61, and 91 when outputting power from the rechargeable battery modules 30, 60, and 90, it is possible not to execute the conduction mode.
· The power supply system 10 includes the plurality of rechargeable batteries modules 30, 60, and 90, and the plurality of rechargeable batteries modules 30, 60, and 90 are connected in parallel to the buses 11 and 12. Therefore, power can be supplied from the plurality of rechargeable batteries modules 30, 60, and 90 to the buses 11 and 12. Then, the control unit 16b selects the rechargeable battery modules in descending order of the output voltages of the rechargeable batteries 31, 61, and 91 as the rechargeable battery module to be put in the conduction mode in the plurality of rechargeable batteries modules 30, 60, and 90. Therefore, the bus voltages Vbus can be retained high whenever possible when executing the conduction mode to directly output power from the rechargeable batteries.
· The control unit 16b sequentially selects the rechargeable battery modules in descending order of the output voltages of the rechargeable batteries 31, 61, and 91 as the rechargeable battery module to be put in the conduction mode in the plurality of rechargeable batteries modules 30, 60, and 90. Therefore, power can be supplied from more rechargeable batteries to the buses 11 and 12 while suppressing the lowering of the bus voltage Vbus when executing the conduction mode to directly output power from rechargeable batteries.
· In the rechargeable battery modules in which differences between the bus voltage Vbus and the output voltages Vo1, Vo2, and Vo3 of the rechargeable batteries 31, 61, and 91 of the rechargeable battery modules 30, 60, and 90 are not smaller than the voltage threshold value Vx, the control unit 16b adjusts the output voltages Vo1, Vo2, and Vo3 of the conversion circuits 40, 70, and 100 such that the differences between the bus voltage Vbus and the output voltages of the rechargeable battery modules are smaller than the voltage threshold value Vx. According to such a configuration, in the rechargeable battery modules in which differences between the bus voltage Vbus and the output voltages Vb1, Vb2, and Vb3 of the rechargeable batteries 31, 61, and 91 of the rechargeable battery modules 30, 60, and 90 are not smaller than the voltage threshold value Vx, the output voltages of the rechargeable battery modules can be raised by adjusting the output voltages of the conversion circuits of the rechargeable battery modules. Thus, power can also be supplied to the buses 11 and 12 from the rechargeable battery modules including the rechargeable batteries 31, 61, and 91 each having a low output voltage.
· The above-described working effect can be exerted by causing the ECU 16 (computer) to execute the conduction mode of the control program applied to the power supply system 10.

### (Second embodiment)

Hereinafter, a second embodiment will be described mainly with differences from the first embodiment. Note that the same portion as in the first embodiment is assigned with the same reference sign to incorporate the description thereof by reference.

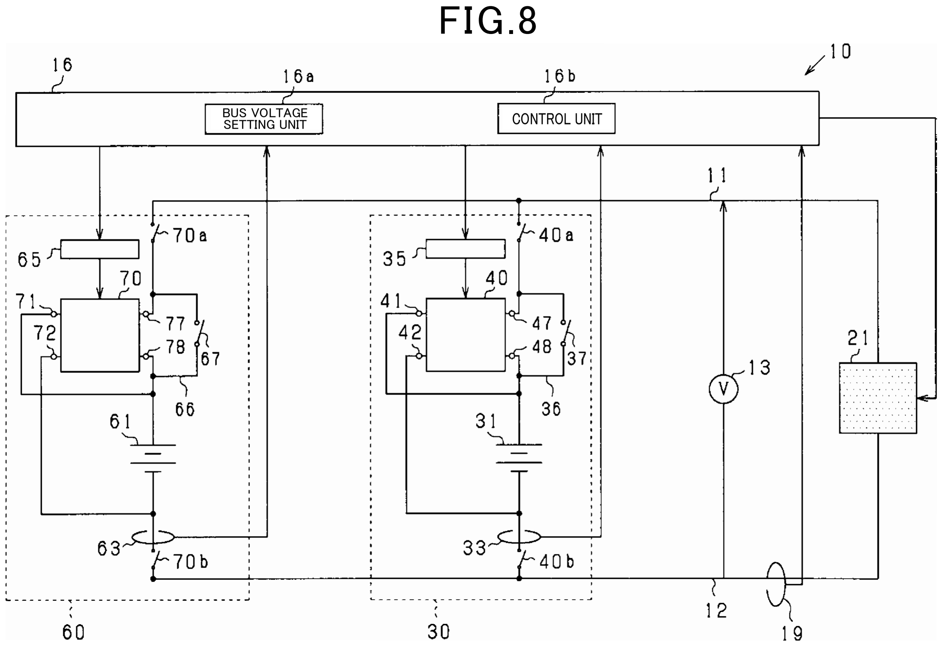

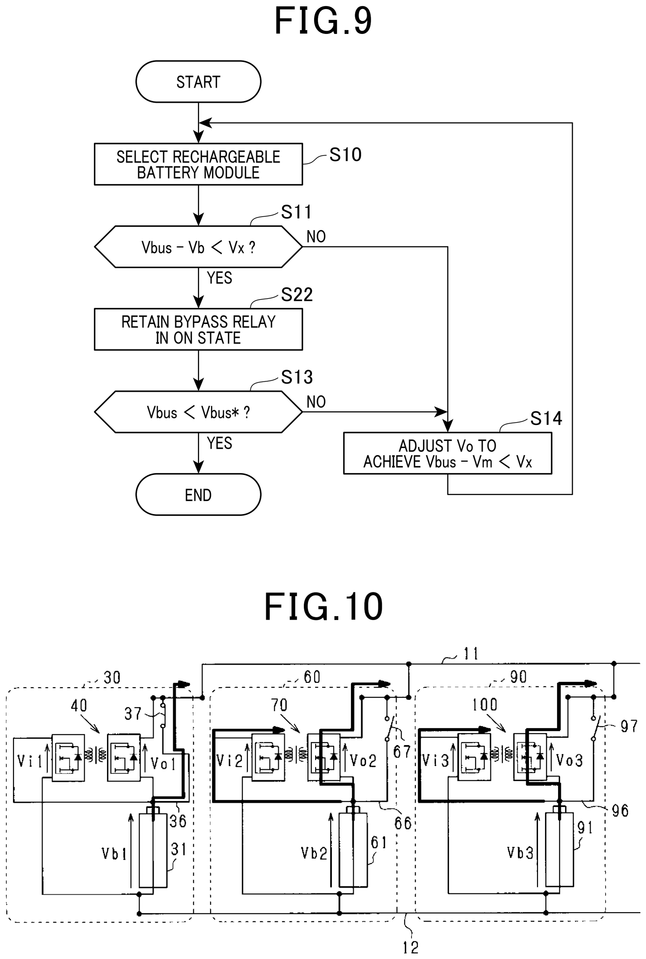

In the present embodiment, the rechargeable battery modules 30, 60, and 90 include, as the connection retaining circuit, bypasses 36, 66, and 96 and bypass relays 37, 67, and 97, as shown in Figs. 8 and 10.

For example, the bypass 36 bypasses the first conversion circuit 40 and connects between the secondary-side positive electrode terminal 47 and the secondary-side negative electrode terminal 48 as the secondary-side terminal pair. The bypass relay 37 is disposed to the bypass 36. The bypass relay 37 (bypass switch) is a relay having a conduction loss smaller than those of the switching elements 54 and 55 of the first conversion circuit 40 and is formed by, for example, a super junction-metal oxide semiconductor field effect transistor (SJ-MOSFET). The bypass relay 37 is controlled by the control unit 16b and interrupts and connects the bypass 36. In the first rechargeable battery module 30, the secondary-side positive electrode terminal 47 and the secondary-side negative electrode terminal 48 are retained in a state of being connected by retaining the bypass relay 37 in an on-state (connection state). That is, in a state in which the bypass 36 is in a state of being connected by the bypass relay 37, the first rechargeable battery 31 is connected to the buses 11 and 12 via the bypass 36 without going through the first conversion circuit 40. Note that as the bypass relay 37, another semiconductor relay having a conduction loss that is not more than the conduction loss of the switching elements 54 and 55 can also be adopted. Further, as the bypass relay 37, a mechanical relay or the like having a conduction loss that is not more than the conduction loss of the switching elements 54 and 55 can also be adopted other than the semiconductor relay. The same applies to the bypasses 66 and 96 and the bypass relays 67 and 97 (bypass switches).

The control unit 16b (ECU 16) executes a conduction mode of retaining the secondary-side terminal pair 47 and 48 (77 and 78) in a state of being connected by the bypass 36 (66) and the bypass relay 37 (67) of the rechargeable battery module 30 (60), on condition that, for example, a difference between the bus voltage Vbus and the output voltage Vb1 (Vb2) of the rechargeable battery 31 (61) of the rechargeable battery module 30 (60) is smaller than the voltage threshold value Vx. Specifically, the secondary-side positive electrode terminal 47 (77) and the secondary-side negative electrode terminal 48 (78) as the secondary-side terminal pair are retained in a state of being connected, by retaining the bypass relay 37(67) in an on-state. At this time, all of the switching elements 43 to 46, 54, and 55 of the conversion circuit 40 (70) of the rechargeable battery module 30 (60) are retained in an off-state.

Fig. 9 is a flowchart showing a procedure for executing the conduction mode. The series of processes is executed by the control unit 16b of the ECU 16 in a state in which the conversion circuits 40, 70, and 100 of the rechargeable battery modules 30, 60, and 90 are driven to output power to the buses 11 and 12. In the processes of the flowchart of Fig. 9, the process of S12 in the flowchart of Fig. 3 is changed to the process of S22, and other processes are the same as in the flowchart of Fig. 3. The same process as in the flowchart of Fig. 3 is assigned with the same S + step number to incorporate the description thereof by reference.

In the process of S22, the bypass relay of the selected rechargeable battery module is retained in an on-state (S22). At this time, all of the switching elements 43 to 46, 54, and 55 of the conversion circuit of the selected rechargeable battery module are retained in an off-state.

Figs. 10 to 12 are diagrams showing aspects of executing the conduction mode when the power supply system 10 includes the first rechargeable battery module 30, the second rechargeable battery module 60, and the third rechargeable battery module 90. All of output voltages Vm1 (Vb1 + Vo1), Vm2 (Vb2 + Vo2), and Vm3 (Vb3 + Vo3) of the rechargeable battery modules 30, 60, and 90 are equal to a bus voltage Vbus.

In Fig. 10, a difference between the bus voltage Vbus and the first output voltage Vb1 of the first rechargeable battery 31 is smaller than the voltage threshold value Vx, a difference between the bus voltage Vbus and the second output voltage Vb2 of the second rechargeable battery 61 is not less than the voltage threshold value Vx, and a difference between the bus voltage Vbus and the third output voltage Vb3 of the third rechargeable battery 91 is not less than the voltage threshold value Vx. In this case, the bypass relay 37 of the first rechargeable battery module 30 is put in an on-state, and a voltage elevating action is executed by the conversion circuits 70 and 100 in the rechargeable battery modules 60 and 90, respectively. Therefore, a switching loss and a conduction loss are cut in the first conversion circuit 40 of the first rechargeable battery module 30. Note that a conduction loss occurs in the bypass relay 37.

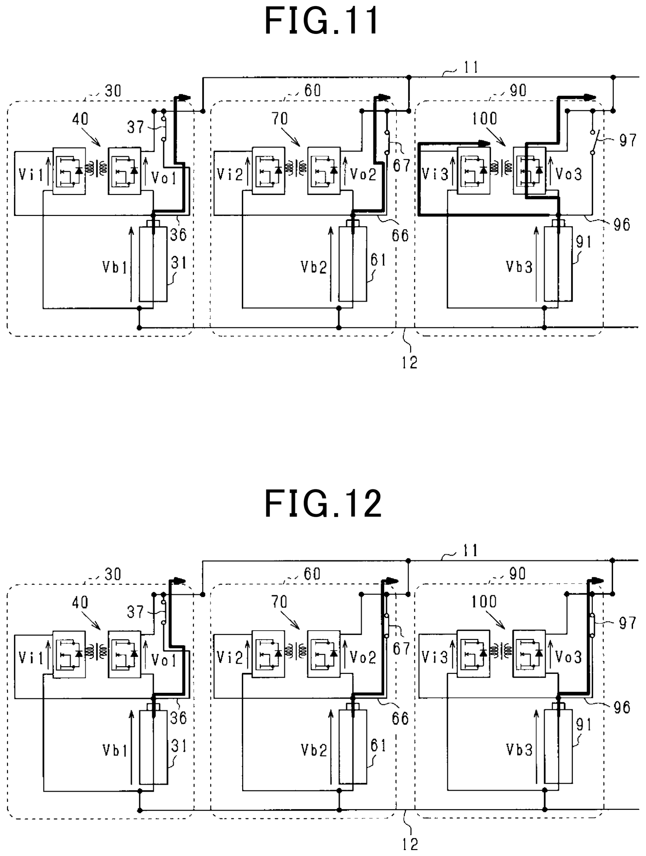

In Fig. 11, a difference between the bus voltage Vbus and the first output voltage Vb1 of the first rechargeable battery 31 is smaller than the voltage threshold value Vx, a difference between the bus voltage Vbus and the second output voltage Vb2 of the second rechargeable battery 61 is smaller than the voltage threshold value Vx, and a difference between the bus voltage Vbus and the third output voltage Vb3 of the third rechargeable battery 91 is not less than the voltage threshold value Vx. In this case, the bypass relays 37 and 67 of the rechargeable battery modules 30 and 60 are put in an on-state, and a voltage elevating action is executed by the third conversion circuit 100 in the third rechargeable battery module 90. Therefore, a switching loss and a conduction loss are cut in the conversion circuits 40 and 70 of the rechargeable battery modules 30 and 60, respectively. Note that a conduction loss occurs in the bypass relays 37 and 67.

In Fig. 12, a difference between the bus voltage Vbus and the first output voltage Vb1 of the first rechargeable battery 31 is smaller than the voltage threshold value Vx, a difference between the bus voltage Vbus and the second output voltage Vb2 of the second rechargeable battery 61 is smaller than the voltage threshold value Vx, and a difference between the bus voltage Vbus and the third output voltage Vb3 of the third rechargeable battery 91 is smaller than the voltage threshold value Vx. In this case, the bypass relays 37, 67, and 97 of the rechargeable battery modules 30, 60, and 90 are put in an on-state. Therefore, a switching loss and a conduction loss are cut in the conversion circuits 40, 70, and 100 of the rechargeable battery modules 30, 60, and 90, respectively. Note that a conduction loss occurs in the bypass relays 37, 67, and 97.

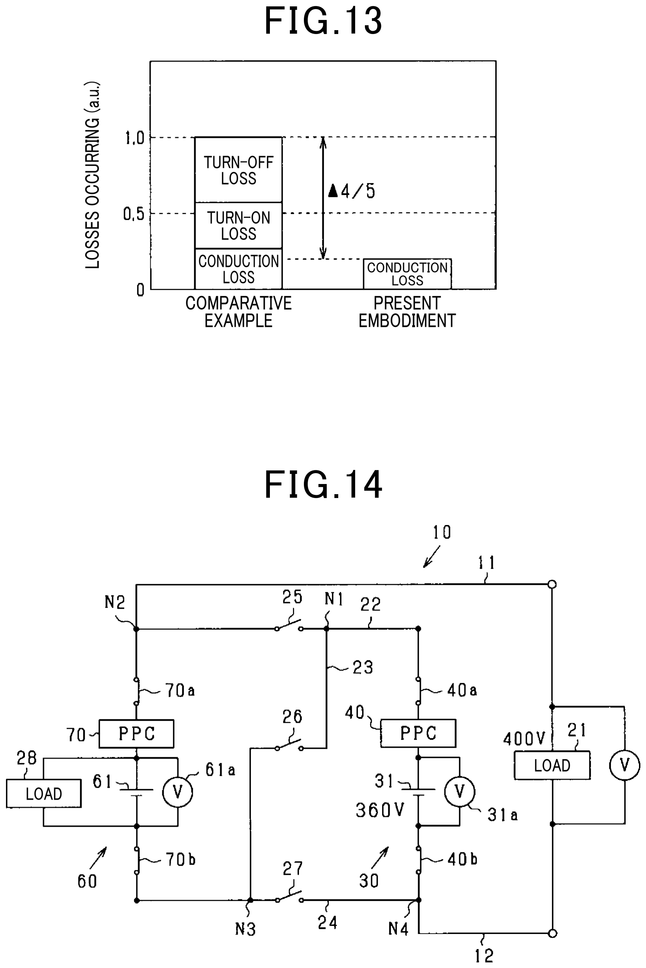

Fig. 13 is a diagram showing losses occurring in the rechargeable battery modules of the comparative example and the present embodiment. The comparative example expresses, for example, a loss when a first output voltage Vm1 is output in the first rechargeable battery module 30 by driving on/off the switching elements 43 to 46, 54, and 55 of the first conversion circuit 40. A turn-on loss and a turn-off loss occur in the switching elements 43 to 46, 54, and 55, and a conduction loss occurs in the switching elements 43 to 46, 54, and 55. The present embodiment expresses, for example, a loss when the first output voltage Vm1 is output by putting the bypass relay 37 of the first rechargeable battery module 30 in an on-state. In the present embodiment, a turn-on loss, a turn-off loss, and a conduction loss can be cut in the switching elements 43 to 46, 54, and 55. Then, the conduction loss of the bypass relay 37, which is smaller than the conduction loss of the switching elements 54 and 55, occurs. As a result, the loss of the comparative example can be cut by 4/5, and the loss occurring is 1/5 of the loss of the comparative example.

The present embodiment has the following advantages in addition to advantages similar to those of the first embodiment.
· Power can be directly output from the rechargeable batteries 31, 61, and 91 by retaining the bypass relays 37, 67, and 97 of the bypasses 36, 66, and 96 in an on-state, i.e., by retaining the bypasses 36, 66, and 96 in a state of being connected by the bypass relays 37, 67, and 97. This allows the main loss in the conduction mode to be only the conduction losses of the bypass relays 37, 67, and 97.
· Since relays having a conduction loss smaller than those of the secondary-side switching elements 54 and 55 of the conversion circuits 40, 70, and 100 are adopted as the bypass relays 37, 67, and 97, the losses when outputting power from the rechargeable batteries 31, 61, and 91 can be further suppressed.

Note that the control unit 16b may retain the secondary-side switching elements 54 and 55 of the conversion circuits 40, 70, and 100 in an on-state (connection-state) when executing the conduction mode to retain the bypass relays 37, 67, and 97 in an on-state (connection-state). According to such a configuration, a conduction loss can be further reduced in the rechargeable battery modules 30, 60, and 90.

Further, the first embodiment and the second embodiment can also be modified and performed as follows. The same portion as in the first embodiment or the second embodiment is assigned with the same reference sign to incorporate the description thereof by reference.
· The control unit 16b may select the rechargeable battery module to be put in the conduction mode and adjust the charged amount (state) of the rechargeable battery of the selected rechargeable battery module such that a difference between the bus voltage Vbus and the output voltage of the rechargeable battery of the selected rechargeable battery module is retained in a state of being smaller than the voltage threshold value Vx. In this case, the rechargeable battery module to be selected and put in the conduction mode is not limited to the rechargeable battery module including the rechargeable battery having the highest output voltage Vb, as long as it is the rechargeable battery module in which a difference between the bus voltage Vbus and the output voltage Vb of the rechargeable battery of the rechargeable battery module is smaller than the voltage threshold value Vx. As an aspect (configuration) of adjusting the charged amount (SOC) of the rechargeable battery of the selected rechargeable battery module, for example, the rechargeable battery of the selected rechargeable battery module can be charged from the rechargeable battery of the rechargeable battery module which is not selected.

According to the above-described configuration, the control unit 16b selects the rechargeable battery module to be put in the conduction mode. Therefore, power can be directly output from the rechargeable battery of the selected rechargeable battery module, on condition that a difference between the bus voltage Vbus and the output voltage Vb of the rechargeable battery of the selected rechargeable battery module is smaller than the voltage threshold value Vx. Furthermore, the control unit 16b adjusts the charged amount of the rechargeable battery of the selected rechargeable battery module such that a difference between the bus voltage Vbus and the output voltage Vb of the rechargeable battery of the selected rechargeable battery module is retained in a state of being smaller than the voltage threshold value Vx. Thus, the conduction mode can be continued while retaining the output voltage Vb of the rechargeable battery of the selected rechargeable battery module.
· The control unit 16b may put the rechargeable battery module not put in the conduction mode into the conduction mode, on condition that a difference between the output voltage Vb of the rechargeable battery of the rechargeable battery module put in the conduction mode and the output voltage Vb of the rechargeable battery of the rechargeable battery module not put in the conduction mode is smaller than the voltage threshold value Vx while any of the rechargeable battery modules is put in the conduction mode. In a state in which the rechargeable battery module is put in the conduction mode, the output voltage Vb of the rechargeable battery of the rechargeable battery module put in the conduction mode coincides with the bus voltage Vbus. Therefore, whether to execute the conduction mode may be determined by comparing the output voltage Vb of the rechargeable battery of the rechargeable battery module put in the conduction mode and the output voltage Vb of the rechargeable battery of the rechargeable battery module not put in the conduction mode. According to the above-described configuration, the rechargeable battery module not put in the conduction mode can be put in the conduction mode to directly output power from the rechargeable battery, when it is unnecessary to increase the voltage to higher than the voltage of the rechargeable battery at the time of outputting power from the rechargeable battery of the rechargeable battery module not put in a conduction mode.

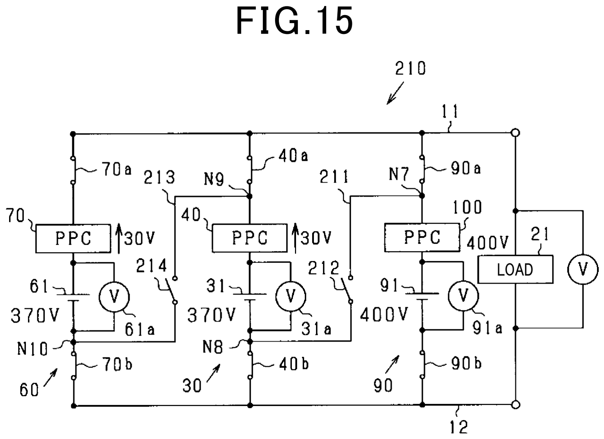

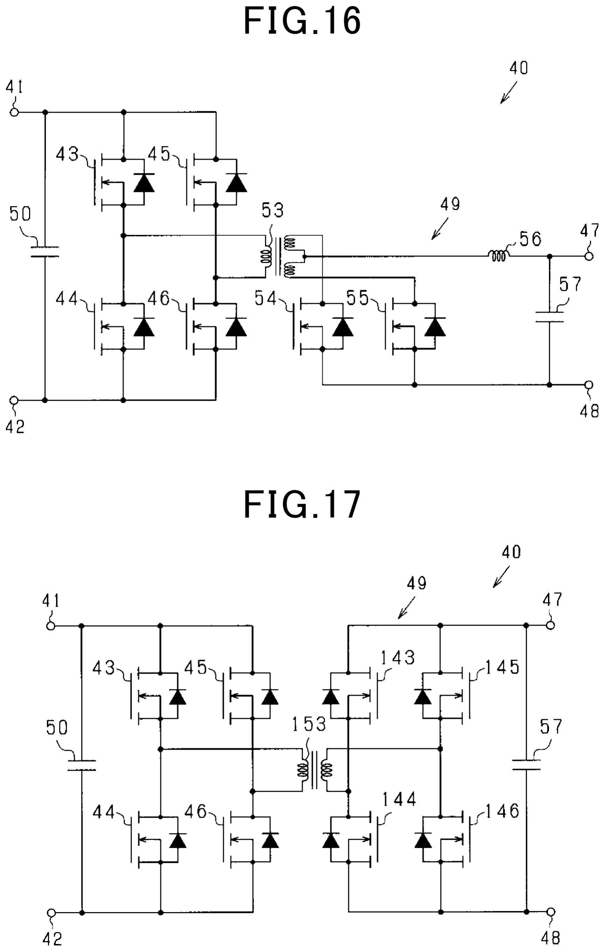

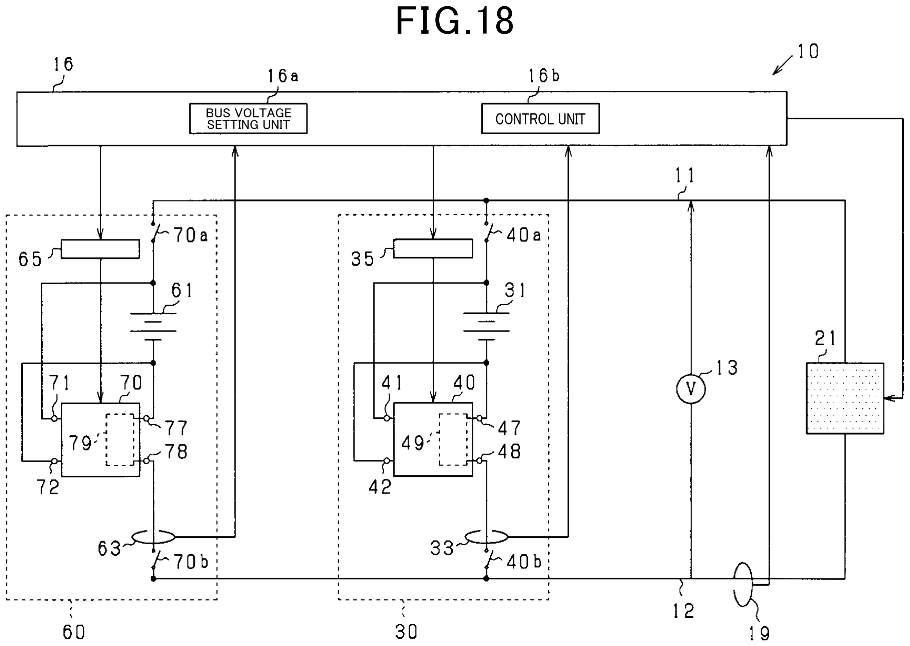

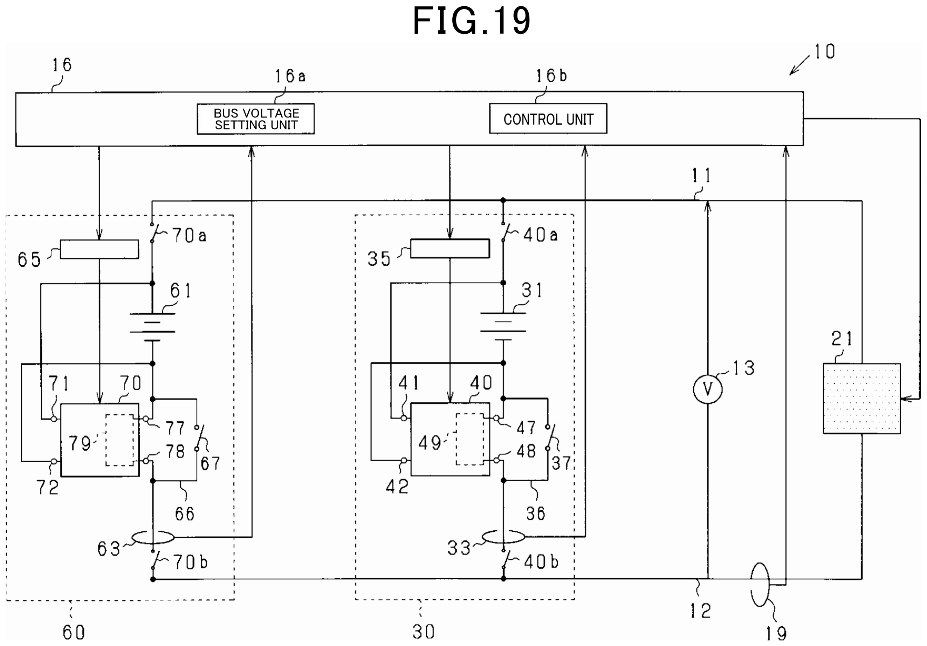

Furthermore, when a difference between the output voltage Vb of the rechargeable battery of the rechargeable battery module put in the conduction mode and the output voltage Vb of the rechargeable battery of the rechargeable battery module not put in the conduction mode is not smaller than the voltage threshold value Vx, the control unit 16b may charge the rechargeable battery of the rechargeable battery module not put in the conduction mode from the rechargeable battery of the rechargeable battery module put in the conduction mode. Specifically, the control unit 16b charges the rechargeable battery of the rechargeable battery module not put in the conduction mode from the rechargeable battery of the rechargeable battery module put in the conduction mode by lowering the output voltage Vo of the conversion circuit of the rechargeable battery module not put in the conduction mode to lower than the current output voltage Vo. According to the above-described configuration, the output voltage Vb can be lowered by decreasing the charged amount of the rechargeable battery of the rechargeable battery module put in the conduction mode, and the output voltage Vb can be raised by increasing the charged amount of the rechargeable battery of the rechargeable battery module not put in the conduction mode. Therefore, a difference between the output voltage Vb of the rechargeable battery of the rechargeable battery module put in the conduction mode and the output voltage Vb of the rechargeable battery of the rechargeable battery module not put in the conduction mode can be reduced, and the rechargeable battery module not put in the conduction mode is easily put in the conduction mode. Note that a difference between the output voltage Vb of the rechargeable battery of the rechargeable battery module put in the conduction mode and the output voltage Vb of the rechargeable battery of the rechargeable battery module not put in the conduction mode can also be reduced by stopping the output of power from the rechargeable battery module not put in the conduction mode.
· A difference between the bus voltage Vbus and the output voltage Vb of the rechargeable battery of the rechargeable battery module can be reduced to smaller than the voltage threshold value Vx by the bus voltage setting unit 16a lowering the bus voltage requirement value Vbus* to lower than the current bus voltage requirement value Vbus*.
· As the load 21, for example, two or more combinations of an inverter and a motor generator (MG) (a motor unit with an inverter) may be connected in parallel to the buses 11 and 12. In such a case, as the number of the motor units with inverters increases, the number of rechargeable battery modules connected to the buses 11 and 12 may also be increased.
· As shown in Fig. 14, a load 28 may be connected in parallel to the second rechargeable battery 61 (rechargeable battery) of the second rechargeable battery module 60 (rechargeable battery module). In this case, by supplying power from the second rechargeable battery 61 to the load 28, the charged amount of the second rechargeable battery 61 can be reduced. Therefore, it is easy to lower the second output voltage Vb2 of the second rechargeable battery 61 of the second rechargeable battery module 60 to lower than the first output voltage Vb1 of the first rechargeable battery 31 of the first rechargeable battery module 30. Therefore, it is easy to perform a control of adding the second output voltage Vo2 of the second conversion circuit 70 to the second output voltage Vb2 of the second rechargeable battery 61 of the second rechargeable battery module 60, and it is easy to adjust the second output voltage Vm2 of the second rechargeable battery module 60 to the bus voltage requirement value Vbus*.
· As shown in Fig. 15, a power supply system 210 may include a path 211 that connects between a connection point N7 connecting the third conversion circuit 100 of the third rechargeable battery module 90 with a relay 90a and a connection point N8 connecting the first rechargeable battery 31 of the first rechargeable battery module 30 with a relay 40b. Furthermore, the power supply system 210 may include a path 213 that connects between a connection point N9 connecting the first conversion circuit 40 of the first rechargeable battery module 30 with a relay 40a and a connection point N10 connecting the second rechargeable battery 61 of the second rechargeable battery module 60 with a relay 70b. A relay 212 (switch) that disconnects and connects the path 211 is disposed in the path 211. A relay 214 (switch) that disconnects and connects the path 213 is disposed in the path 213. The relays 212 and 214 are controlled by the ECU 16. Note that the paths 211 and 213 and the relays 212 and 214 constitute a switching circuit. That is, the power supply system 210 may include three or more rechargeable battery modules (a plurality of rechargeable battery modules), and the switching circuit may switch between serial connection and parallel connection of the three or more rechargeable battery modules to the buses 11 and 12.
· As shown in Fig. 16, the switching elements 54 and 55 of Fig. 2 may be connected between the transformer 53 and the negative electrode terminal 48 in the first conversion circuit 40 (conversion circuit). Such a configuration also can exert the same working effect as that of the first conversion circuit 40 of Fig. 2. The same applies to the second conversion circuit 70, the third conversion circuit 100, and the like (conversion circuit).
· As shown in Fig. 17, the first conversion circuit 40 (conversion circuit) may be a known insulated DCDC converter including a transformer 153 that is not a center tap type and a secondary-side full bridge circuit constituted by switching elements 143 to 146. The switching elements 143 to 146 are, for example, an FET or an insulated gate bipolar transistor (IGBT). The switching elements 143 to 146 are controlled by the ECU 16. The same applies to the second conversion circuit 70, the third conversion circuit 100, and the like (conversion circuit).
· As the first conversion circuit 40 (conversion circuit), a resonance type DCDC converter also can be adopted. Further, as the first conversion circuit 40 (conversion circuit), a non-insulated DCDC converter such as a buck converter also can be adopted. The same applies to the second conversion circuit 70, the third conversion circuit 100, and the like (conversion circuit).
· The rechargeable battery modules 30 and 60 may be constituted as shown in Fig. 18. That is, the positive electrode of the first rechargeable battery 31 is connected to the bus 11. The primary-side positive electrode terminal 41 of the first conversion circuit 40 is connected to the positive electrode of the first rechargeable battery 31, and the primary-side negative electrode terminal 42 of the first conversion circuit 40 is connected to the negative electrode of the first rechargeable battery 31. Further, the secondary-side positive electrode terminal 47 of the first conversion circuit 40 is connected to the negative electrode of the first rechargeable battery 31. The secondary-side negative electrode terminal 48 of the first conversion circuit 40 is connected to the bus 12. In this case, the positive electrode and the negative electrode of the first rechargeable battery 31 are also connected to the primary-side terminal pair 41 and 42 of the first conversion circuit 40, respectively, and the first rechargeable battery 31 is connected in series to the secondary-side terminal pair 47 and 48 of the first conversion circuit 40. Such a configuration also can exert the same working effect as that of the first embodiment. Note that the same applies to the second rechargeable battery module 60, the third rechargeable battery module 90, and the like (rechargeable battery module).
· As shown in Fig. 19, the first rechargeable battery module 30 may include the bypass 36 and the bypass relay 37, and the second rechargeable battery module 60 may include the bypass 66 and the bypass relay 67, in addition to the configuration of Fig. 18. In this case, in a state in which the bypass 36 (66) is connected by the bypass relay 37 (67), the rechargeable battery 31 (61) is similarly connected to the buses 11 and 12 via the bypass 36 (66) without going through the conversion circuit 40 (70). Such a configuration also can exert the same working effect as that of the second embodiment.
· At least one function of the bus voltage setting unit 16a and the control unit 16b of the ECU 16 can also be achieved by, for example, a power control electronic control unit (ECU) that controls motive power of an electric vehicle or a vehicle control ECU (central ECU) that controls an electric vehicle in an integrated manner. Further, when the power supply system 10 is used as, for example, a stationary power source, the functions of the bus voltage setting unit 16a and the control unit 16b of the ECU 16 also can be achieved by a stationary power source control ECU (control device) that controls a stationary power source.
· The ECU 16 and the method therefor according to the present disclosure may be achieved by a dedicated computer that is provided by constituting a memory and a processor programmed to execute one or more functions (instructions) embodied by a computer program. Alternatively, the ECU 16 and the method therefor according to the present disclosure may be achieved by a dedicated computer provided by constituting a processor with one or more dedicated hardware logic circuits. Alternatively, the ECU 16 and the method therefor according to the present disclosure may be achieved by one or more dedicated computers constituted by a combination of a memory and a processor programmed to execute one or more functions and a processer constituted by one or more hardware logic circuits. The computer program may be stored as an instruction to be executed by a computer in a computer-readable non-transitory tangible memory medium.

Note that the above-described embodiments and modification examples can be executed in combination in a range in which the combination is possible.

The present disclosure has been described in accordance with examples, but it is understood that the present disclosure should not be limited to the examples and configurations. The present disclosure encompasses various modified examples and modifications within an equivalent range. In addition, various combinations and forms as well as other combinations and forms including one or more/less constituents thereto are also within the spirit and scope of the present disclosure.

## Claims

1. A power supply system (10, 210) comprising a rechargeable battery (31, 61, 91) and a conversion circuit (40, 70, 100) that converts power input from the rechargeable battery to a primary-side terminal pair (41, 42, 71, 72) by drive of a switching element (43 to 46, 54, 55, 143 to 146) and outputs the converted power from a secondary-side terminal pair (47, 48, 77, 78),
wherein a positive electrode and a negative electrode of the rechargeable battery are individually connected to the primary side terminal pair of the conversion circuit, and the rechargeable battery is connected in series to the secondary-side terminal pair of the conversion circuit, and
wherein the power supply system comprises a connection retaining circuit (36, 37, 49, 66, 67, 79, 96, 97) that retains the secondary-side terminal pair in a state of being connected.

2. The power supply system according to claim 1, wherein
the connection retaining circuit is constituted by a secondary-side circuit (49, 79) of the conversion circuit connected to the secondary-side terminal pair and retains the secondary-side terminal pair in a state of being connected by the secondary-side circuit via a secondary-side switching element (54, 55) that is the switching element included in the secondary-side circuit.

3. The power supply system according to claim 1, wherein
the connection retaining circuit includes:
a bypass (36, 66, 96) that bypasses the conversion circuit and connects the secondary-side terminal pair, and
a bypass switch (37, 67, 97) that interrupts and connects the bypass; and
the connection retaining circuit retains the secondary-side terminal pair in a state of being connected by retaining the bypass in a state of being connected by the bypass switch.

4. The power supply system according to any one of claims 1 to 3,
wherein a rechargeable battery module (30, 60, 90) is constituted by the rechargeable battery, the conversion circuit, and the connection retaining circuit,
wherein the rechargeable battery module is connected to a power supply bus (11, 12), and
wherein the power supply system further comprises a control unit (16b) configured to execute a conduction mode of retaining the secondary-side terminal pair in a state of being connected by the connection retaining circuit of the rechargeable battery module, on condition that a difference between a bus voltage as a voltage of the power supply bus and an output voltage of the rechargeable battery of the rechargeable battery module is smaller than a voltage threshold value.

5. The power supply system according to claim 4, comprising a plurality of the rechargeable battery modules,
wherein the plurality of the rechargeable battery modules are connected in parallel to the power supply bus, and
wherein the control unit is configured to select the rechargeable battery module including the rechargeable battery having the highest output voltage as the rechargeable battery module to be put in the conduction mode in the plurality of the rechargeable battery modules.

6. The power supply system according to claim 4, comprising a plurality of the rechargeable battery modules,
wherein the plurality of the rechargeable battery modules are connected in parallel to the power supply bus, and
wherein the control unit is configured to sequentially select the rechargeable battery modules in descending order of output voltages of the rechargeable batteries as the rechargeable battery module to be put in the conduction mode in a plurality of the rechargeable battery modules.

7. The power supply system according to claim 6, wherein
the control unit is configured to adjust an output voltage of the conversion circuit such that in a rechargeable battery module in which a difference between the bus voltage and an output voltage of the rechargeable battery of the rechargeable battery module is not smaller than the voltage threshold value, a difference between the bus voltage and an output voltage of the rechargeable battery module is smaller than the voltage threshold value.

8. The power supply system according to claim 4, comprising a plurality of the rechargeable battery modules,
wherein the plurality of the rechargeable battery modules are connected in parallel to the power supply bus, and
wherein the control unit is configured to select the rechargeable battery module to be put in the conduction mode and adjust a state of the rechargeable battery of the selected rechargeable battery module so as to retain a state in which a difference between the bus voltage and an output voltage of the rechargeable battery of the selected rechargeable battery module is smaller than the voltage threshold value.

9. The power supply system according to claim 4, comprising a plurality of the rechargeable battery modules,
wherein the plurality of the rechargeable battery modules are connected in parallel to the power supply bus, and
wherein the control unit is configured to put the rechargeable battery module not put in the conduction mode into the conduction mode, on condition that a difference between an output voltage of the rechargeable battery of the rechargeable battery module put in the conduction mode and an output voltage of the rechargeable battery of the rechargeable battery module not put in the conduction mode is smaller than the voltage threshold value, while any one of the rechargeable battery modules is put into the conduction mode.

10. The power supply system according to claim 9, wherein the control unit is configured to charge the rechargeable battery of the rechargeable battery module not put in the conduction mode from the rechargeable battery of the rechargeable battery module put in the conduction mode, when a difference between an output voltage of the rechargeable battery of the rechargeable battery module put in the conduction mode and an output voltage of the rechargeable battery of the rechargeable battery module not put in the conduction mode is not smaller than the voltage threshold value.

11. The power supply system according to claim 10, wherein the control unit is configured to charge the rechargeable battery of the rechargeable battery module not put in the conduction mode from the rechargeable battery of the rechargeable battery module put in the conduction mode, by lowering an output voltage of the conversion circuit of the rechargeable battery module not put in the conduction mode to lower than a current output voltage.

12. A control program applied to a power supply system (10, 210) in which
a rechargeable battery module (30, 60, 90) including a rechargeable battery (31, 61, 91) and a conversion circuit (40, 70, 100) is connected to a power supply bus (11, 12), the conversion circuit converting power input from the rechargeable battery to a primary-side terminal pair (41, 42, 71, 72) by drive of a switching element (43 to 46, 54, 55, 143 to 146) and outputting the converted power from a secondary-side terminal pair (47, 48, 77, 78),
a positive electrode and a negative electrode of the rechargeable battery are individually connected to the primary-side terminal pair of the conversion circuit,
the rechargeable battery is connected in series to the secondary-side terminal pair of the conversion circuit, and
the power supply system includes a connection retaining circuit (36, 37, 49, 66, 67, 79) that retains the secondary-side terminal pair in a state of being connected,
wherein the control program causes a computer (16) to execute a conduction mode of retaining the secondary-side terminal pair in a state of being connected by the connection retaining circuit of the rechargeable battery module, on condition that a difference between a bus voltage as a voltage of the power supply bus and an output voltage of the rechargeable battery of the rechargeable battery module is smaller than a voltage threshold value.
